# EUROPEAN PATENT APPLICATION

(11) **EP 2 913 476 A1**
(43) Date of publication of application: **02.09.2015**
(21) Application number: 14157315.4
(22) Date of filing: 28.02.2014
(51) Int. Cl.: E21C 41/26, G06Q 99/00

(54) **Stockyard material segmentation method**

(71) Applicant: Siemens Aktiengesellschaft, 80333 München (DE)
(72) Inventor: Das, Saptarshi, 560102 Bangalore (IN); R, Karthik, 560100 Banglaore (IN)

(57) **Abstract**

The present invention discloses a method for segmenting stockyard material blocks by position and quality based clustering steps using stockyard semantics. Each stockyard material block comprises a corresponding x, y and z coordinates and at least one quality parameter. The segmenting method comprises of a step of performing a two-dimensional position based clustering based on the x and y coordinates of each material block such that the material blocks connected in a contiguous manner in x and y coordinates form a heap. The second step constitutes performing a three-dimensional quality plus position based sub-clustering based on the x, y and z coordinates of each material block in each heap such that the material blocks having the same quality parameter and connected in a contiguous manner in the x, y and z coordinate form a pile.

## Description

The present invention relates to a method for segmenting stockyard material blocks by clustering and more particularly to a fast method for segmenting stockyard material by position and quality based clustering steps.

A typical stockyard contains huge quantities of materials which may be of the same type, for example coal or iron ore, but different quality or of different grade. For example a coal stockyard may contain several thousands of tonnes of coal but the grade of coal stored in one location of the stockyard may be significantly superior to the grade of coal stored in another location within the same stockyard. A stockyard may be as huge as a few kilometers in length and breadth. Managing such huge quantities of materials over such large areas manually is a tedious and a cost-ineffective process. There may also be multiple such big stockyards within a plant which need to be managed. Information about each unit volume of the stockyard material, hereinafter referred to as stockyard material block, present in the stockyard can be ascertained by machines and techniques which form state of the art today. Such information forms useful stockyard material data and can be, for example, the coordinates of the stockyard material block and its quality parameters. However, there is no known or existing method for management or clustering of stockyard material quickly and automatically which segments each stockyard material block based on its position and quality.

One important use of segmentation of stockyard material is for carrying out blend planning process. But it can also be used for several other stockyard inventory management and reporting tasks too. The blend planning process is an important task in stockyard management. Based on user requirements, one has to choose materials of different quality from the stockyard and then blend them to result in a blended material which meets the user requirements. User requirement can be a particular quality parameter for the stockyard material, e.g. content of ash, moisture, calorific value etc., or a set of quality parameters which together form a grade for the stockyard material, e.g. superior grade, inferior grade, grade A etc. This process of selecting the material based on user requirements and blending together to arrive at a resultant material from the blending process is called as forward planning. Forward planning becomes tedious when there are a variety of materials in the stockyard and requirements span across multiple quality parameters or criteria. Based on the record of materials present in the stockyard, one has to try combinations of piles of material and calculate the blend result for each combination. It is an iterative and time consuming process. Another drawback with this process is that it is not optimized. If criteria like minimizing reclamation effort, maximizing profit etc. have to be considered, forward planning becomes even more time consuming.

There are many patents which have disclosed different data clustering algorithms, for example EP 1 191 459 A1 discloses a hierarchical data clustering method, US 8 463 784 discloses a computer-implemented method for improving data clustering stability and EP 2 541 409 A1 discloses parallelization of large scale data clustering analytics, but none of them are optimized for clustering stockyard or in general bulk material in a quick and automated manner.

Therefore, in order to carry out the blend process in a quick, definite and effective way it is necessary to have the stockyard material data automatically and quickly organized and arranged accordingly. This will help, amongst other things, in stockyard inventory management based on user requirements.

It is an object of the present invention to provide an automatic and fast data clustering method for bulk material handling applications in a stockyard.

The object of the invention is achieved by a method for segmenting stockyard material blocks by way of stepwise clustering. The exemplary stockyard has X, Y and Z axes where X axis denotes the length of the stockyard, Y axis denotes the breadth of the stockyard and Z axis denotes the vertical height. Each material block possesses a corresponding x, y and z coordinates and at least one quality parameter. The x coordinate represents the location of the material block in the X axis, the y coordinate represents the location of the material block in the Y axis and the z coordinate represents the location of the material block in the Z axis.

The method comprises of a step of performing a two-dimensional clustering based on the x and y coordinates of each material block such that the material blocks connected in a contiguous manner in x and y coordinates form a heap. This step is also called as position based clustering. The second step constitutes performing a three-dimensional sub-clustering based on the quality parameter and the x, y and z coordinates of each material block within each heap such that the material blocks having the same quality parameter but disconnected in the x, y and z coordinates or material blocks having a difference in the quality parameter and connected in the x, y and z coordinates contiguously form a different pile. In other words, the material blocks having the same quality parameter and connected in a contiguous manner in x, y and z coordinates form a pile. This second level of sub-clustering takes place within each heap. This step is also called as quality plus position based sub-clustering.

A typical stockyard, having X, Y and Z axes, can house material of same type but different grades or quality parameters located over different coordinates of the stockyard. The material can be stacked in different locations, and sometimes dissimilar grade of material can be even stacked on top of the other. The stockyard material can also be new or old, for example, depending on the date of purchase. For example a stockyard for coal will contain coal from different lots having different physical characteristics and quality, such as density, ash content, sulphur, moisture, calorific value etc. Similar will be the case for a stockyard containing iron ore or any other material in bulk. When a user places a request for a particular grade of stockyard material having certain quality parameters, hereinafter referred to as desired quality parameters, it is easier to blend materials from different piles meeting the user requirements after segmentation of the stockyard material done according to the method disclosed in this invention.

The invention disclosed herein proposes a method for fast data clustering using some key domain specific knowledge related to stockyard, hereinafter referred to as stockyard semantics, for segmentation of stockyard material data. Although data clustering is a computation intensive process, good amount of computation can be decreased by incorporating the stockyard semantics. Some stockyard semantics which help in decreasing the computational complexity of the disclosed data clustering method are elaborated below.

The basic unit volume of the stockyard material is a stockyard material block and the stockyard has X, Y and Z axis, where X and Y denote the length and breadth of the stockyard and Z denotes the height of the stockyard material present in a heap, i.e. the vertical axis. Each material block has x, y and z coordinates. All stockyard material blocks which are connected together in the x and y coordinates form a heap. In other words, the material blocks having adjacent x and y coordinates without any physical separation between them constitute a heap. The material blocks in a heap cannot be separated in Z axis due to gravity. This results in a two-dimensional clustering of the stockyard material blocks based on the position of the material blocks ascertained from their x and y coordinates.

As mentioned, this position based clustering is done in two dimensional (XY) plane. After doing two-dimensional clustering for the stockyard, the stockyard would have heaps based on the position of the stockyard material.

As there is no possibility of disconnection in Z axis it is enough to do position based clustering only in XY plane. After doing position based clustering, the next task would be to further sub cluster each heap since each heap can have materials possessing different quality parameters.

The next step is three-dimensional sub-clustering of material blocks present in each heap into piles which takes into account the quality parameter of the material blocks as well as its position in the X, Y and Z axes. During the comparison between the quality parameters between two adjacent material blocks, even if one of the desired quality parameter differs between the two material blocks in a heap, they would be classified under different piles. Complexity of clustering method reduces in the three-dimensional clustering step as firstly, the stockyard has been segmented into smaller portions, known as heaps, based on the x and y coordinates of each material block and secondly because the quality parameter for each material block is to be compared with that of the adjacent material block within the same heap only until the first mismatch of quality parameter is found thereby the complexity in computation is reduced significantly due to the possible reduction in the number of comparison steps.

Thus, using stockyard semantics the data clustering problem can be split into two major tasks - first, position based clustering where heaps are split based on their physical connectivity and proximity with each other in the X-Y plane and second, quality plus position based sub-clustering where each heap is considered separately for sub-clustering based on change in desired quality parameter of the stockyard material as well as physical connectivity in the X-Y-Z three-dimensional space. The resultant sub-cluster forms a pile of homogenous stockyard material possessing same desired quality parameters. Therefore stockyard material having same desired quality parameters are treated as belonging to the same pile provided the material blocks are present within the same heap and are physically connected or adjacent to each other.

After the quality based sub-clustering, dependency between the sub clusters, i.e. piles, can be resolved depending on the plant configuration. It is quite common that in a stockyard materials of different qualities are stacked one on top of the other. If there is a pile which is lying on top of another pile then the pile lying below is dependent on the pile lying above it as during reclamation by a reclaimer it is not possible to remove the material which is lying below without displacing the material which is lying above. Similarly, if reclamation can happen only from one side of the stockyard, then the piles closer to the rail or the outer boundary have to be reclaimed before reclaiming the piles which are farther from the rail or the boundary. Therefore, piles which are farther from the reclaimer are dependent on piles which are closer to the reclaimer.

Data clustering is classification of data points under different groups. There are hundreds of data clustering algorithms known from the state of the art. In general, data clustering algorithms can be broadly grouped under hierarchical or partitional class. Partitional algorithms, e.g. K-means, Gaussian Mixture Model etc., partition the data points into different independent groups. Hierarchical clustering algorithms, e.g. agglomerative, divisive etc., partition data at different levels. At each level, clusters would be combined, in case of agglomerative hierarchical clustering algorithm; or split, in case of divisive hierarchical clustering algorithm. This action of combining or splitting will be done based on the measure of dissimilarity between sets of observation.

Computation complexity of hierarchical algorithms is typically O(n³) where n is the number of data points. For example, a plant has four stockyards, each of size 1000m X 25m X 50m and the size of material blocks is 1m³. The total number of data points could be around 5 million which is huge for hierarchical data clustering. Depending on the quality parameters available for each 1m³ of material, the complexity will further increase as computational complexity of calculating dissimilarity is proportional to the number of quality parameters.

The clustering technique disclosed in this invention is a hierarchical clustering approach where the first level of clustering is done based on two-dimensional position dissimilarity followed by a second level of sub-clustering based on quality and three-dimensional position dissimilarity. After quality based sub-clustering, the material blocks are separated into independent partitions, or piles, thereby bringing the disclosed technique also under partitional clustering.

Therefore, the proposed clustering technique in this disclosure for clustering stockyard material information is a novel mixture of hierarchical and partitional clustering. This way the computational complexity is reduced drastically by the usage of the problem specific semantics, i.e. the stockyard semantics as mentioned earlier.

In one embodiment of the invention one or more quality parameters together form a grade. The grade is characterized as the quality of the material block. For example the quality parameters for stockyard material such as coal can be any one of density, calorific value, moisture, grain size, content of ash, carbon, sulphur, nitrogen, hydrogen, oxygen etc. The grade can be defined by a single quality parameter or a combination of two or more quality parameters. The advantage of using grade as a differentiating factor enables a user to selectively choose the grade of the material that he requires based on a combination of few quality parameters and inclusion of various quality parameters helps in finer segregation of the stockyard material. A grade may provide a range of acceptable quality parameters instead of having strict and definite values for each quality parameter. This will provide best results for the blending process without making the process too restrictive or the blend result unachievable.

In accordance with the stockyard semantic, change in even one of the desired quality parameters would result in sub clustering, therefore all quality parameters for two adjacent material blocks need to be compared only as a worst case scenario when all the previous quality parameters are found to match for the particular material blocks. In the process of comparing the quality parameters one after the other, once a quality parameter difference is detected, then other quality parameters need not even be compared. For example, if we consider a stockyard with 1 million ton of materials having density of 1kg/m³ and material blocks of size 1m³, even if four comparison operations are avoided for 25% of the material blocks because of the consideration of the above mentioned stockyard semantic, then 1 million comparison operations are avoided which is a significant reduction in computational complexity. In the above example we are assuming that there are eight desired quality parameters and the first mismatch occurs in the 4^{th} quality parameter between two adjacent material blocks and 25% of the material blocks in a heap are lying on the border of each pile.

In an embodiment the quality parameter as mentioned above is a user-defined quality parameter. The user can specify a definite value for each quality parameter or an acceptable range of values for each quality parameter as is desired. For example, a user may require a stockyard material having sulphur content of 0.9% only and ash content percentage in the range of 9.6-10.5.

In another embodiment the grade of the stockyard material is defined by a user-requirement. In other words, the grade is user-defined. The user can then choose the different combination of quality parameters according to his need to arrive at a desired grade. This way the user is provided with several alternatives and options to choose from.

In another embodiment of the method, the step of clustering is a combination of hierarchical and partitional clustering methods. The hierarchical clustering method helps in reducing the complexity of the calculations by carrying out a two step clustering process. The partitional clustering method reducing the number of data points by partitioning, i.e. the large number of material blocks are reduced in number for computation by combining them as a heap based on the physical coordinates of the material blocks and separating them from other material blocks which are not connected. The next level of partitional clustering further reduces the number of data points by partitioning material blocks having dissimilar grade, i.e. material blocks of same grade are combined within each heap to form a pile. Thus the novel mixture of hierarchical and partitional clustering methods reduces the complexity of the computation required for segmenting the stockyard material.

In another embodiment of the method, the method further comprises a step of caching the two-dimensional clustering information retrieved during the first level of position based clustering. Caching this information will make the information available for future use when the user requirements may change but the position and the quantity of the stockyard material would be the same. There could be different blend requests from same or different customers. At a particular instance of time, user might want to obtain blend result for different quality requirements or grade. Change in quality requirements would just need a re-run of quality based sub clustering, i.e. the three-dimensional sub-clustering step. Position based clustering results when cached will help in saving the computation time. Position based clustering can be done during fixed time periods, say every 1 hour, or can be triggered by user when a significant change in stockyard has happened, for example when new stock of material has been brought inside the stockyard, some stockyard material has been reclaimed or when the stockyard has been redesigned.

In yet another embodiment the method further comprises a step of caching the three-dimensional clustering information retrieved during the second level of quality based sub-clustering. The cached information can be used at a later point of time when the user requirements in respect of the grade remains the same and storing the information in a memory unit will help for easy and faster retrieval of the needed stockyard material.

An exemplary stockyard material block has a dimension of one cubic metre. Each unit of stockyard material can be monitored with their coordinates and quality parameters stored as information usable during the clustering steps. Keeping the size of each unit equal and definite helps in managing the stockyard material in a uniform and organized manner. 1m³ is only an exemplary size for dividing the stockyard material into a basic unit, however any other dimension can also be used depending on the nature of the stockyard material and the usage.

The above-mentioned and other features of the invention will now be addressed with reference to the accompanying drawings of the present invention. The illustrated embodiments are intended to illustrate, but not limit the invention. The drawings contain the following figures, in which like numbers refer to like parts, throughout the description and drawings.
FIG.1 is an isometric view of a stockyard storing stockyard material.
FIG.2 is a front view of an exemplary simplistic stockyard.
FIG.3 is a top view of an exemplary simplistic stockyard.
FIG.4 is a front view of an exemplary heap in a stockyard having multiple piles.
FIG.5 shows a flowchart containing the steps to be performed for segmenting stockyard material blocks according to the disclosed method.

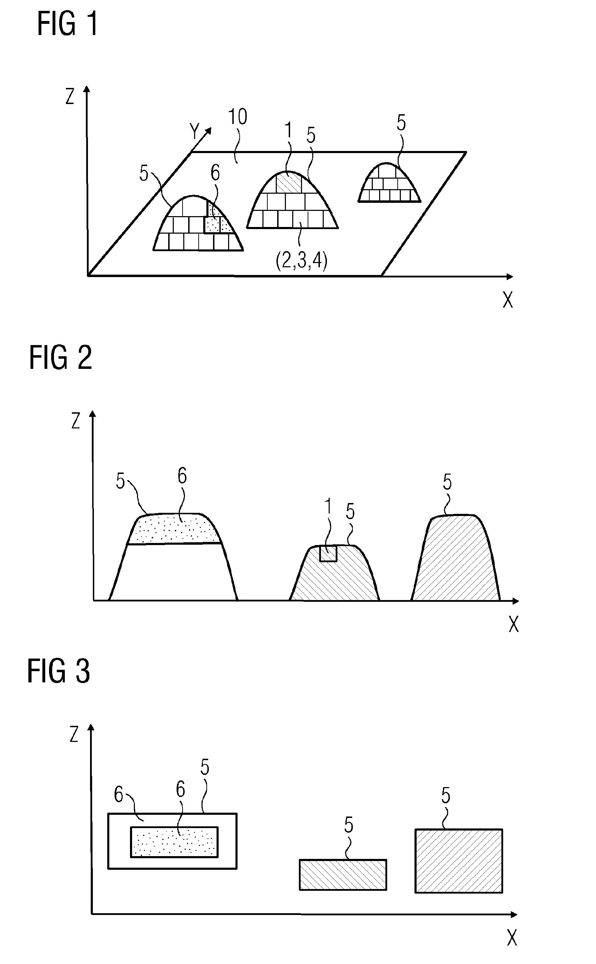

FIG.1 is an isometric view of a stockyard 10 having X, Y and Z axis with stockyard material blocks 1 arranged in stacks forming heaps 5. Each stockyard material block has a corresponding x 2, y 3 and z 4 coordinates which identifies its location in the stockyard 10. As an exemplary view only three heaps 5 have been shown and each heap 5 is physically disconnected from the neighbouring heaps 5. According to FIG.1 each heap 5 has several material blocks 1 and all the material blocks 1 of each heap are not necessarily possessing the same quality parameters or are not of the same grade. The material blocks 1 of the same grade are clustered together to form a pile 6 provided they are connected and are in the same heap 5.

FIG.2 shows a simplistic stockyard when viewed from the front in two-dimension. In this example of a simplistic stockyard with three heaps 5 and four piles 6, each material block 1 of size 1m³ is considered with just three grades, i.e. quality parameters, namely density, ash and sulfur content.

Table 1 contains unclustered stockyard material block 1 information shown as an example. The information of each material block 1 is given in Table 1. Each row of Table 1 represents each material block 1. The first three columns provide the coordinates 2, 3, 4 of each material block 1 in the stockyard 10. The 4^{th}, 5^{tn} and the 6^{th} columns of Table 1 give information about the quality parameters of each of the material blocks 1. The quality parameters shown here are density, ash and sulphur, only as an example.

**Table 1: Unclustered stockyard material block information**

| **Location** | | | **Density** | **Ash (%)** | **Sulfur (%)** |
|---|---|---|---|---|---|
| **X** | **Y** | **Z** | | | |
| 50 | 1 | 0 | 1 | 21 | 4.2 |
| 50 | 1 | 1 | 1 | 21 | 4.2 |
| -- | -- | -- | | | |
| -- | -- | -- | | | |
| 92 | 7 | 11 | 1 | 17 | 3.8 |
| 92 | 7 | 12 | 1 | 17 | 3.8 |
| -- | -- | -- | | | |
| -- | -- | -- | | | |
| 410 | 3 | 7 | 1 | 13 | 0.9 |
| -- | -- | -- | | | |
| -- | -- | -- | | | |
| -- | -- | -- | | | |
| 1000 | 11 | 14 | 0.8 | 9 | 1.9 |

Using stockyard semantics, as mentioned before, the problem of clustering can be split into two major tasks, one being two-dimensional clustering based on position of piles 5 and second being quality plus position based sub-clustering in three dimension where individual clusters, i.e. heaps 5, obtained by position based clustering are further clustered based on quality to form piles 6.

According to FIG.2, after performing two-dimensional clustering for the exemplary stockyard 10, the stockyard 10 would be having three heaps 5 as shown.

FIG.3 shows an exemplary simplistic stockyard when viewed from the top in two-dimension. Quality based clustering compares the quality parameters, which may be defined by a user, between physically connected blocks in three-dimensional space and any difference in the quality parameter will result in sub-clustering. After doing three-dimensional quality based clustering, the first cluster in FIG.2 will actually get sub clustered into two piles 6 because of the change in the quality parameter of the stockyard material. Overall there will be 4 piles in the example stockyard as shown in FIG.2 and FIG.3.

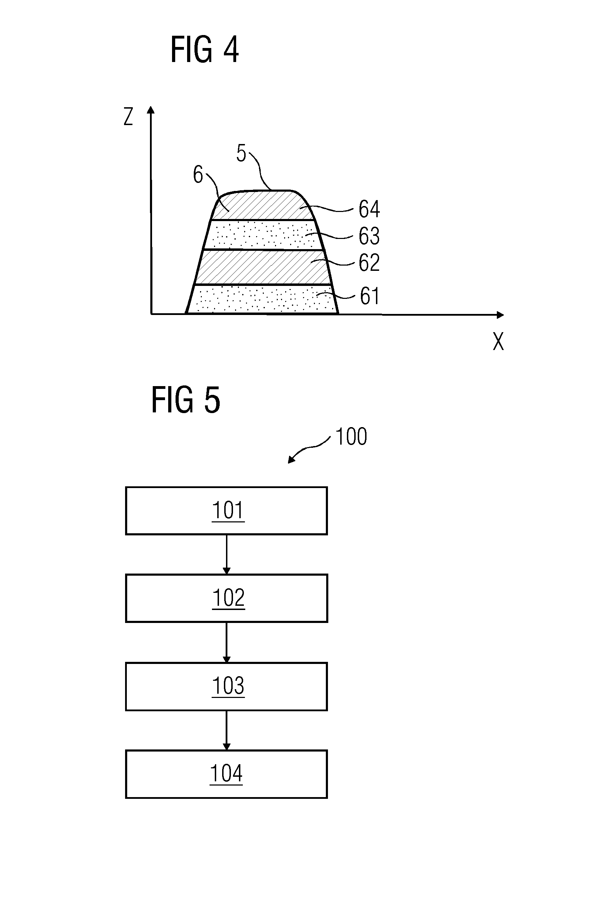

FIG.4 is a front view of an exemplary heap 5 in a stockyard having multiple piles 6. Not all stockyards are as simple as the one shown in FIG.2 and FIG.3. There could be heaps 5 with multiple layers. Such a heap 5 is shown in FIG.4 which has stockyard materials belonging to only two grades but spread across four layers 61, 62, 63, 64 in XZ axis. Hence there is a need for position and quality based sub-clustering in three-dimensional space where quality based sub-clustering separates layers 61, 62, 63, 64 based on the difference both in quality parameters and position ensuring that even material blocks 1 with same quality parameter but separated by a material of different type also gets segmented into a different pile 6.

The example heap 5 shown in FIG.4 when segmented will result in four piles 6 as illustrated. It is to be noted that in case the stockyard material has to be taken out from the lowest layer 61, the portion of materials above the lowest layer 61, i.e. the top three layers 62, 63, 64, have to be removed first so that the lowest layer 61 can be accessed. After individual piles 6 are obtained, their extreme co-ordinates can be known easily. Typically reclamation is done from top to bottom. So we can see that reclamation of each layer is dependent on the layer above it. Therefore it can be observed in FIG.4 the lowest layer 61 is dependent on the layer immediately above it 62 which is in turn dependent on the layer immediately above it 63 which is in turn dependent on the top-most layer 64 of the heap 5.

If such a dependency relationship along with height of each layer is provided, then such an input can be used to optimally calculate the amount of stockyard material to be reclaimed from one layer to reclaim desired amount from another layer in order to meet the blend requirements for the blend process. This information can also be used to calculate the reclamation effort and use it for scheduling reclamation jobs in the most effective way.

As seem in FIG.5, the method 100 comprises of a few steps to achieve the segmentation of the stockyard material blocks. The flowchart shows the preliminary and essential step 101 of position based clustering followed by the next preliminary and essential step 102 of quality based clustering. The flowchart also displays other steps 103, 104 that can form a part of the method 100 disclosed. Step 101 of the method 100 comprises performing a two-dimensional clustering based on the x 2 and y 3 coordinates of each material block 1 such that the material blocks 1 connected in a contiguous manner in x 2 and y 3 coordinates form a heap 5. Step 102 comprises performing a three-dimensional sub-clustering based on the z 4 coordinate of each material block 1 in each heap 5 such that the material blocks 1 having same grade and connected in a contiguous manner in z 4 coordinate form a pile 6. In step 103 of FIG.5 caching of the two-dimensional clustering information takes place. In step 104 caching of the three-dimensional clustering information obtained during the step 102 of three-dimensional sub-clustering takes place.

Although the invention has been described with reference to specific embodiments, this description is not meant to be construed in a limiting sense. Various modifications of the disclosed embodiments, as well as alternate embodiments of the invention, will become apparent to persons skilled in the art upon reference to the description of the invention. It is therefore contemplated that such modifications can be made without departing from the embodiments of the present invention as defined.

## Claims

1. A method (100) for segmenting stockyard material blocks(1) having a corresponding x (2), y (3) and z (4) coordinates and at least one quality parameter; the method (100) comprises:
- a step (101) of performing a two-dimensional clustering based on the x (2) and y (3) coordinates of each material block (1) such that the material blocks (1) connected in a contiguous manner in x (2) and y (3) coordinates form a heap (5) ;
- a step (102) of performing a three-dimensional sub-clustering based on the quality parameter and the x (2), y (3) and z (4) coordinates of each material block (1) in each heap (5) such that the material blocks (1) disconnected in the x (2), y (3) and z (4) coordinates but having the same quality parameter or connected contiguously in the x (2), y (3) and z (4) coordinates but having a difference in the quality parameter form a different pile (6).

2. The method (100) according to the above claim wherein, one or more quality parameters together form a grade.

3. The method (100) according to the above claim, wherein the grade is defined by a user-requirement.

4. The method (100) according to any one of the above claims, wherein the quality parameters are one of density, ash content, sulphur content, moisture content, grain size or calorific value of the stockyard material blocks (1).

5. The method (100) according to any one of the above claims, wherein the steps of (101, 102) clustering are a combination of hierarchical and partitional clustering methods.

6. The method (100) according to any one of the above claims, wherein the method (100) further comprises a step (103) of caching a two-dimensional clustering information obtained from the step (101) of two-dimensional clustering.

7. The method (100) according to any one of the above claims, wherein the method (100) further comprises a step (104) of caching a three-dimensional clustering information obtained from the step (102) of three-dimensional sub-clustering.
